# EUROPEAN PATENT APPLICATION

(11) **EP 4 582 401 A1**
(43) Date of publication of application: **09.07.2025**
(21) Application number: 23860443.3
(22) Date of filing: 30.08.2023
(51) Int. Cl.: C04B 28/26, B28B 1/32, B28B 1/38, C04B 14/10, C04B 18/08, C04B 18/14, C04B 22/06, C04B 22/08

(54) **POWDER MIXTURE AND METHOD FOR PRODUCING GEOPOLYMER SOLIDIFIED MATERIAL USING SAME**

(30) Priority: 31.08.2022 JP 2022137986
(71) Applicant: IHI Corporation, Tokyo 135-8710 (JP); IHI Construction Materials Co., Ltd., Tokyo 130-0026 (JP)
(72) Inventor: KISAKU Tomoaki, Tokyo 135-8710 (JP); TAKAHASHI Koichi, Tokyo 130-0026 (JP); KOMORI Teruo, Niigata-shi Niigata 950-3102 (JP); YAMAMURA Yuki, Tokyo 135-8710 (JP); SAINO Jun, Tokyo 130-0026 (JP); SAITO Yukiko, Niigata-shi Niigata 950-3102 (JP); JING Nie, Tokyo 135-8710 (JP); IKAWA Shunya, Tokyo 130-0026 (JP); MARUYAMA Hayato, Niigata-shi Niigata 950-3102 (JP); ISOBE Miki, Niigata-shi Niigata 950-3102 (JP); KASAHARA Kenji, Niigata-shi Niigata 950-3102 (JP)
(74) Representative: TBK
(86) International application number: PCT/JP2023/031621
(87) International publication number: WO 2024/048681

(57) **Abstract**

Provided is a powder mixture capable of easily forming a geopolymer solidified body at a site and of producing a geopolymer solidified body having high strength.

The geopolymer solidified body is made to be formed by adding water or with water and aggregate to a powder mixture obtained by mixing an active filler and an alkali powder, thus a geopolymer solidified body can be formed by bringing the powder mixture previously prepared into a site and mixing the powder mixture with water or with water and aggregate at the site. Further, any one of a powder of sodium metasilicate, a powder of sodium metasilicate and sodium hydroxide, and a powder of sodium metasilicate and potassium hydroxide is made to be used as an alkali powder of the powder mixture, and therefore geopolymer concrete having high strength can be formed.

## Description

### TECHNICAL FIELD

The present invention relates to a powder mixture for producing geopolymer concrete for use in forming a structure in, for example, civil engineering or construction, and a method for producing a geopolymer solidified body using the same.

### BACKGROUND ART

Conventionally, in civil engineering, construction, and the like, structures have generally been formed using concrete or mortar. However, geopolymer compositions have received attention in recent years as an alternative material to concrete or mortar, and the application of geopolymer concrete to various structures such as railroad ties and wall materials for buildings has been examined.

A geopolymer composition is a solidified body obtained by mixing and reacting an alkali-active amorphous powder (active filler) such as fly ash (coal ash), metakaolin, and blast furnace slag, with an alkali solution for activating it (an aqueous sodium silicate solution, an aqueous potassium silicate solution, an aqueous sodium hydroxide solution, an aqueous potassium hydroxide solution). Similarly to cement concrete, geopolymer concrete develops strength comparable to that of cement concrete by adding fine aggregate, coarse aggregate, and the like (see Table 1).

**[Table 1]**

| Quantity of material per unit volume of concrete (kg/m3) | | | | | | |
|---|---|---|---|---|---|---|
| FA | BS | KOH | SiO₂ | Water | Fine aggregate | Coarse aggregate |
| 456 | 24 | 140 | 47 | 109 | 659 | 850 |
| | | Produced water glass = 296 | | | | |

It should be noted that in Table 1, FA denotes JIS Type-I fly ash, BS denotes blast furnace slag fine powder (Blaine's value: 4000 cm²/g), and produced water glass is produced by mixing and dissolving KOH and SiO₂ in water.

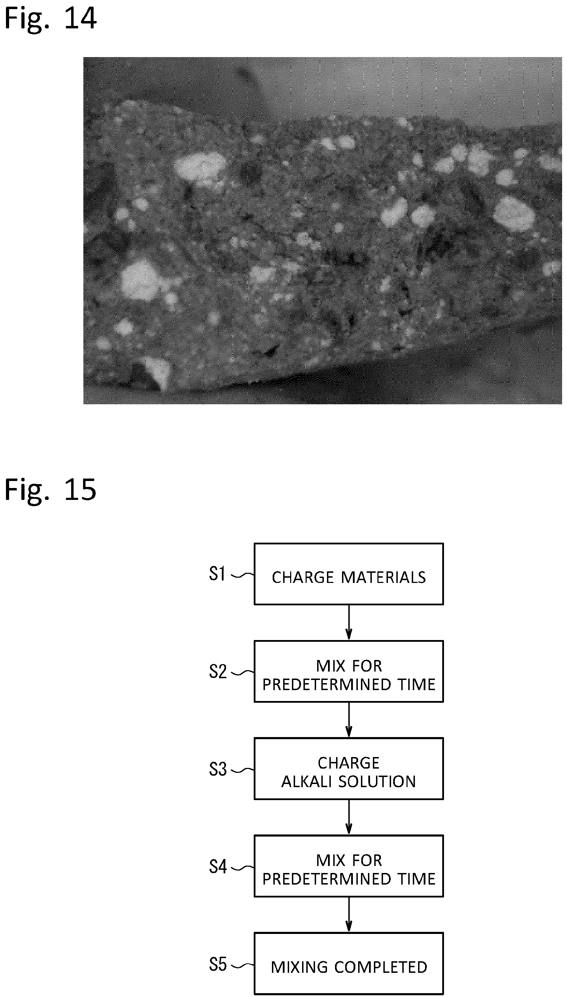

Generally, as shown in Figure 15, geopolymer concrete is conventionally produced by first charging materials such as a powder (active filler) such as coal ash, blast furnace slag, and metakaolin and aggregate (fine aggregate, coarse aggregate) into a mixer (S1), stirring the resultant for a predetermined time (e.g., 2 minutes) (S2), then adding an alkali solution such as water glass (S3), mixing the resultant in the mixer for a predetermined time (e.g., 5 minutes) (S4), and completing the mixing. Then, the mixed product is poured into a formwork, cured for several hours, and then demolded after hardening to form a structure (see, for example, Patent Literature 1).

Alternatively, a method has been studied in which an active filler and a sodium metasilicate powder as an alkali source are used as an alternative to an alkali solution, and fine aggregate and water are added thereto and mixed therewith (see, for example, Non Patent Literature 1).

### CITATION LIST

### PATENT LITERATURE

Patent Literature 1: Japanese Patent No. 5091519 NON PATENT LITERATURE

Non Patent Literature 1: "Report: Effects of Sodium Metasilicate Addition Method and Retarder on Compressive Strength Characteristics and Flow Temporal Change of Geopolymer Mortar", Proceedings of the Japan Concrete Institute., Vol. 40, No. 1, 2018, pp. 1821 to 1826

### SUMMARY OF INVENTION

### TECHNICAL PROBLEM

Meanwhile, the alkali solution added in step S3 in the conventional production method described above is very difficult to handle due to its high viscosity, and therefore dedicated facilities and steps for the alkali solution are separately required. That is, an aqueous sodium silicate solution and an aqueous potassium silicate solution used in the conventional production method are poor in flowability due to their high temperature dependence and viscosity, and therefore there is a problem that it takes a long time for temperature control at a charging site, weight measurement of the alkali solution (water glass), stirring, and mixing. Therefore, unlike general cement products, the conventional production method is a production method using materials unsuitable for placing at a site.

Further, in the above study, an active filler and a sodium metasilicate powder as an alkali source are used to improve the general production method, but a geopolymer composition produced thereby has a problem that it is inferior in strength to a geopolymer composition produced by the general production method.

In light of such problems, it is an object of the present invention to provide a powder mixture capable of easily forming a geopolymer solidified body at a site and of producing a geopolymer solidified body having high strength and a method for producing a geopolymer solidified body using the same.

### SOLUTION TO PROBLEM

In order to achieve the above object, the present invention is directed to a powder mixture that is obtained by mixing an active filler and an alkali powder and that is to be mixed with water or with water and aggregate added thereto to form a geopolymer solidified body, wherein the alkali powder is composed of any one of a powder of sodium metasilicate, a powder of sodium metasilicate and sodium hydroxide, and a powder of sodium metasilicate and potassium hydroxide, and a molar ratio of a total of sodium and potassium to aluminum ((Na+K)/Al) in the entire powder mixture is more than 0.7.

Therefore, a geopolymer solidified body is formed by adding water or water and aggregate to the powder mixture and mixing them, which makes it possible to form a geopolymer solidified body by bringing the powder mixture previously prepared into a site and mixing the powder mixture with water or with water and aggregate at the site. In this case, since any one of a powder of sodium metasilicate, a powder of sodium metasilicate and sodium hydroxide, and a powder of sodium metasilicate and potassium hydroxide is used as the alkali powder in the powder mixture, and the molar ratio of the total of sodium and potassium to aluminum ((Na+K)/Al) in the entire powder mixture is more than 0.5, geopolymer concrete having high strength is formed.

Further, in order to achieve the above object, the present invention is also directed to a method for producing a geopolymer solidified body, the method including adding a potassium-containing low-viscosity aqueous alkali solution and aggregate to a powder mixture obtained by mixing an active filler and an alkali powder and mixing them to form a geopolymer solidified body, wherein the alkali powder is composed of any one of a powder of sodium metasilicate, a powder of sodium metasilicate and sodium hydroxide, and a powder of sodium metasilicate and potassium hydroxide, and a molar ratio of sodium contained in sodium metasilicate in the alkali powder to a total of sodium and potassium in the entire geopolymer solidified body (Na/(Na+K)) is 0.4 or more.

Therefore, a geopolymer solidified body is formed by adding water and a low-viscosity aqueous alkali solution or water, a low-viscosity aqueous alkali solution, and aggregate to the powder mixture and mixing them, which makes it possible to form a geopolymer solidified body by bringing the powder mixture previously prepared into a site and mixing the powder mixture with a low-viscosity aqueous alkali solution at the site. In this case, since any one of a powder of sodium metasilicate, a powder of sodium metasilicate and sodium hydroxide, and a powder of sodium metasilicate and potassium hydroxide is used as the alkali powder in the powder mixture, and the molar ratio of sodium contained in sodium metasilicate in the alkali powder to the total of sodium and potassium in the entire geopolymer solidified body (Na/ (Na+K)) is 0.4 or more, geopolymer concrete having high strength is formed.

### ADVANTAGEOUS EFFECTS OF INVENTION

According to the present invention, it is possible to form a geopolymer solidified body by bringing the powder mixture previously prepared into a site and adding water or an aqueous alkali solution thereto at the site. Therefore, a geopolymer solidified body can easily be formed at a site, and all or almost all the alkali solution conventionally used is replaced with "alkali powder and water", which eliminates the need for large storage facilities such as a tank for temporarily storing the alkali solution such as water glass and measuring tools and reduces the cost of materials used for geopolymer concrete due to non-use of the expensive alkali solution or a significant reduction in the amount of the expensive alkali solution to be used. In this case, geopolymer concrete having high strength can be formed, which is very advantageous for practical use.

### BRIEF DESCRIPTION OF DRAWINGS

Figure 1 is a diagram showing production steps of a geopolymer solidified body according to the first embodiment of the present invention.
Figure 2 is a diagram showing production steps of a geopolymer solidified body according to the second embodiment of the present invention.
Figure 3 is a partially-enlarged photograph of a geopolymer solidified body of Comparative Example 2.
Figure 4 is a partially-enlarged photograph of a geopolymer solidified body of Example 10.
Figure 5 is a partially-enlarged photograph of a geopolymer solidified body of Example 11.
Figure 6 is a partially-enlarged photograph showing another portion of the geopolymer solidified body of Example 11.
Figure 7 is a partially schematic diagram illustrating a dry spraying method.
Figure 8 is a partially-enlarged photograph of a geopolymer solidified body of Example 12.
Figure 9 is a partially-enlarged photograph showing another portion of the geopolymer solidified body of Example 12.
Figure 10 is a partially-enlarged photograph of a geopolymer solidified body of Example 13.
Figure 11 is a partially-enlarged photograph showing another portion of the geopolymer solidified body of Example 13.
Figure 12 is a photograph of a geopolymer powder-containing bag body.
Figure 13 is a photograph of two geopolymer powder-containing bag bodies stacked to each other.
Figure 14 is a photograph of the cross-sections of geopolymer solidified bodies in the bag bodies.
Figure 15 is a diagram showing conventional geopolymer concrete production steps.

### DESCRIPTION OF EMBODIMENTS

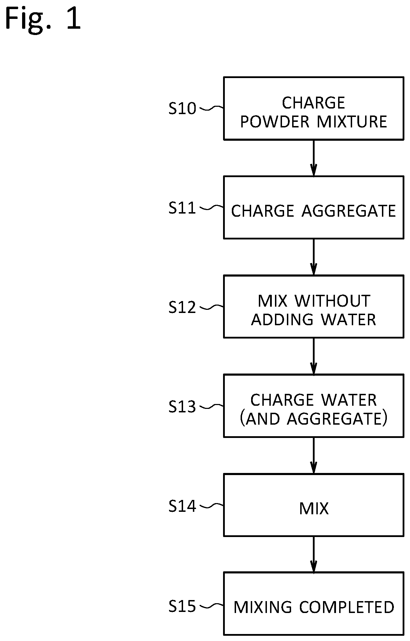

Figure 1 shows, as the first embodiment of the present invention, a method for producing a geopolymer solidified body for use as a structure in, for example, civil engineering or construction.

A geopolymer solidified body of the present embodiment is formed by mixing a powder mixture obtained by mixing an active filler and an alkali powder with water or with water and aggregate added thereto.

The active filler is a powder activated and solidified by mixing with an alkali activator, and is composed of, for example, an alkali-active amorphous powder, such as fly ash (coal ash), metakaolin, and blast furnace slag.

The alkali powder is any one of a powder of sodium metasilicate, a powder of sodium metasilicate and sodium hydroxide, and a powder of sodium metasilicate and potassium hydroxide, and the sodium metasilicate has an average particle diameter of 1000 µm or less, and each of the sodium hydroxide and the potassium hydroxide has an average particle diameter of 5000 µm or less.

The aggregate is composed of sand, gravel, artificial aggregate, or the like, and is classified into fine aggregate and coarse aggregate according to the size of particles.

Hereinbelow, the method for producing a geopolymer solidified body of the present embodiment will be described with reference to Figure 1.

First, a powder mixture is previously prepared in a factory or the like. In this case, the molar ratio of the total of sodium and potassium to aluminum ((Na+K)/Al) in the entire powder mixture is set to more than 0.5 (preferably 0.7), the molar ratio of silicon to aluminum (Si/Al) is set to 1.8 or more, and the molar ratio between the total of sodium and potassium in a hydroxide and the total of sodium and potassium in a silicic acid-containing alkali is set to 0.53 or less. Further, metakaolin is contained in a mass ratio of 10% or more relative to the entire active filler.

Then, the powder mixture is brought into a site and charged into a mixer (S10), aggregate (fine aggregate and coarse aggregate) is charged (S11), and the resultant is mixed without adding water (S12). Then, a predetermined amount of water (pure water) or water (pure water) and aggregate is/are charged into the mixer (S13), the resultant is mixed in the mixer (S14), and the mixing is completed (S15). The resultant is poured into a formwork or the like and hardened by curing at 0°C or higher and 80°C or lower to form a geopolymer solidified body. Here, the amount of water added in step S13 is preferably set so that the molar ratio of water to alumina (H₂O/Al₂O₃) in the entire geopolymer solidified body is 13 or less. In step S13, a mixed solution of water and a small amount of an alkali solution may be added.

As described above, according to the present embodiment, a geopolymer solidified body is formed by adding water or water and aggregate to a powder mixture obtained by mixing an active filler and an alkali powder and mixing them. Therefore, a geopolymer solidified body can be formed by bringing the powder mixture previously prepared into a site and mixing the powder mixture with water or with water and aggregate at the site. This makes it possible to easily perform placing at a site and replace all or almost all the alkali solution conventionally used with "the alkali powder and water", thereby eliminating the need for large storage facilities such as a tank for temporarily storing the alkali solution such as water glass and measuring tools and reducing the cost of materials used for geopolymer concrete due to non-use of the expensive alkali solution or a significant reduction in the amount of the expensive alkali solution to be used.

Further, the alkali powder in the powder mixture is any one of a powder of sodium metasilicate, a powder of sodium metasilicate and sodium hydroxide, and a powder of sodium metasilicate and potassium hydroxide, and the molar ratio of the total of sodium and potassium to aluminum ((Na+K)/Al) in the entire powder mixture is set to more than 0.7, and therefore geopolymer concrete having high strength can be formed, which is very advantageous for practical use.

Further, the powder mixture is mixed with aggregate without adding water, and then the resultant is mixed with water or a mixed solution of water and an alkali solution added thereto, and therefore the alkali powder in the powder mixture is finely pulverized by mixing before adding water and therefore has an increased specific surface area, which makes it possible to increase the speed of a chemical reaction. This makes it possible to reduce the time required for dissolving the alkali powder in water. Therefore, even when the alkali solution is replaced with the alkali powder and water, strength developability of geopolymer concrete can be improved and therefore time and effort required for curing can significantly be reduced.

Further, the powder of sodium metasilicate used as the alkali powder has an average particle diameter of 1000 µm or less, and each of the powder of sodium hydroxide and the powder of potassium hydroxide used as the alkali powder has an average particle diameter of 5000 µm or less, and therefore the alkali powder is sufficiently dissolved during mixing, which makes it possible to promote a chemical reaction.

Further, the molar ratio of silicon to aluminum (Si/Al) is set to 1.8 or more, which makes it possible to produce a solidified body having stable strength (e.g., having a compressive strength of 30 MPa or more) .

Further, the molar ratio between the total of sodium and potassium in a hydroxide and the total of sodium in a silicic acid-containing alkali is set to 0.53 or less, which makes it possible to produce a solidified body having stable strength (e.g., having a compressive strength of 30 MPa or more).

In this case, metakaolin is contained in a mass ratio of 10% or more relative to the entire active filler, and therefore the strength development effect of metakaolin can sufficiently be obtained.

Further, the molar ratio of water to alumina (H₂O/Al₂O₃) in the entire geopolymer solidified body is set to 13 or less, which makes it possible to enhance the compressive strength of the geopolymer solidified body.

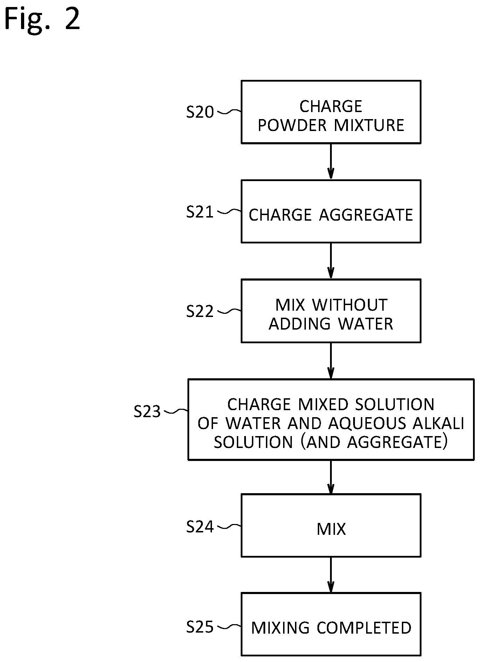

Figure 2 shows the second embodiment of the present invention in which a mixed solution of water and an aqueous alkali solution is added to the powder mixture. The aqueous alkali solution to be used is one containing potassium and having low viscosity at ordinary temperature, the molar ratio of sodium contained in sodium metasilicate in the alkali powder to the total of sodium and potassium in the entire geopolymer solidified body (Na/(Na+K)) is set to 0.4 or more, and the molar ratio of the total of sodium and potassium to aluminum ((Na+K)/Al) in the aqueous alkali solution and the entire powder mixture is set to 1.0 or more.

In the present embodiment, first, a powder mixture is previously prepared in a factory or the like as in the case of the above-described embodiment. In this case, the molar ratio of the total of sodium and potassium to aluminum ((Na+K)/Al) in the entire powder mixture is set to more than 0.5 (preferably 0.7), the molar ratio of silicon to aluminum (Si/Al) is set to 1.8 or more, and the molar ratio between the total of sodium and potassium in a hydroxide and the total of sodium and potassium in a silicic acid-containing alkali is set to 0.53 or less. Further, metakaolin is contained in a mass ratio of 10% or more relative to the entire active filler.

Then, the powder mixture is brought into a site and charged into a mixer (S20), aggregate (fine aggregate and coarse aggregate) is charged (S21), and the resultant is mixed without adding water (S22). Then, a predetermined amount of a mixed solution of water (pure water) and an aqueous alkali solution or the mixed solution and aggregate is/are charged into the mixer (S23), the resultant is mixed in the mixer (S24), the mixing is completed (S25), and the resultant is poured into a formwork or the like and hardened by curing at 0°C or higher and 80°C or lower to form a geopolymer solidified body. Here, the amount of water charged in step S23 is preferably set so that the molar ratio of water to alumina (H₂O/Al₂O₃) in the entire geopolymer solidified body is 13 or less.

As described above, in the present embodiment, a mixed solution of water and an aqueous alkali solution having low viscosity at ordinary temperature is added to the powder mixture, and therefore a geopolymer solidified body having higher strength can be formed without impairing handleability at a site.

Alternatively, a geopolymer solidified body may be formed by adding a low-viscosity aqueous alkali solution and 70 vol% or less of an object to be solidified in a non-solidified state to the powder mixture of the first embodiment. In this case, for example, an ion exchange resin can be solidified as an object to be solidified.

Ion exchange resins are discarded as, for example, radioactive waste from nuclear power plants, but a method for treating them has not yet been established today, and therefore water and the ion exchange resins are temporarily stored in storage tanks. On the other hand, newly discarded ion exchange resins may be treated for volume reduction by, for example heat treatment. However, old ion exchange resins discarded on the assumption that they are not subjected to heat treatment and ion exchange resins discarded in a non-scheduled manner cannot be heat-treated or pulverized and are therefore stored in storage tanks.

On the other hand, concrete as an existing solidifying material cannot stabilize ion exchange resins as radioactive waste because water of crystallization in concrete is decomposed by radioactive rays so that the soundness of the solidifying material is lost and there is concern about safety due to hydrogen generation.

A geopolymer containing no water of crystallization is suitable as a radioactive waste solidifying material, but is poor in adhesion with an ion exchange resin. Therefore, an ion exchange resin not to be subjected to treatment such as heat treatment or pulverization cannot sufficiently be stabilized by the conventional production method in which an active filler and an alkali solution need to sufficiently be mixed, because the ion exchange resin and the geopolymer are not well mixed or the amount of water contained in the ion exchange resin is too large.

Therefore, when a geopolymer solidified body is formed by adding the powder mixture of the present invention and a low-viscosity aqueous alkali solution to an ion exchange resin stored together with moisture, the moisture stored together with the radioactive ion exchange resin can also be used as a raw material for geopolymer, which makes it possible to evenly cover the surface of the ion exchange resin with a geopolymer and sufficiently stably solidify the ion exchange resin not to be subjected to treatment such as heat treatment or pulverization.

In this case, when a geopolymer slurry formed by previously mixing an active filler and an alkali solution is mixed with the ion exchange resin, adhesion between the geopolymer in the form of slurry and the ion exchange resin is poor, but when the powder mixture of geopolymer and a low-viscosity aqueous alkali solution are mixed with the ion exchange resin, the geopolymer powder adheres to the ion exchange resin wetted with the low-viscosity aqueous alkali solution so that an excellent geopolymer solidified body is formed.

At this time, when only the geopolymer powder and water are used, the reaction speed is low. Therefore, the low-viscosity aqueous alkali solution is added to be able to quickly form a geopolymer solidified body. As for the composition of the geopolymer of the present invention, a large amount of sodium metasilicate is contained, and therefore the moisture of the geopolymer itself can sufficiently be reduced, which is very advantageous for solidifying an object to be solidified such as an ion exchange resin.

If the amount of the ion exchange resin to be mixed with the powder mixture exceeds 70 vol% of the total of them, the amount of the ion exchange resin is excessive relative to the powder so that cracking is likely to occur in the geopolymer solidified body, and therefore the amount of the ion exchange resin is preferably 70 vol% or less.

It should be noted that the above-described embodiment has been described with reference to a case where an ion exchange resin is an object to be solidified, but the present invention can be applied also to solidification treatment of, for example, sludge formed by wastewater treatment or industrial wastewater treatment, precipitates in boilers or tanks, sludge containing organic matter, and the like.

Further, the present invention makes it possible to form a geopolymer solidified body on a wall surface or the like by spraying the powder mixture of the first embodiment together with water or a low-viscosity aqueous alkali solution.

A spraying method is generally known as a concrete construction method for use in concrete construction at a large area or hole repair work. Currently, a so-called wet spraying method is widely used in which polymer cement mixed with water is sent into a nozzle and sprayed together with compressed air. Such a wet spraying method has the advantage that the quality of materials is stable because the materials are previously mixed. However, when the wet spraying method is applied to a geopolymer, the usable time is limited and there is a risk of pump clogging, which makes long-range transport difficult. Particularly, repair work in tunnels and work in nuclear power reactors require long-range pressure feeding, and are therefore difficult to be performed by the wet spraying method.

When the powder mixture of the first embodiment of the present invention is sprayed together with water or a low-viscosity aqueous alkali solution, water or the low-viscosity aqueous alkali solution and the geopolymer powder can be supplied as raw materials without previously mixing them to obtain a geopolymer slurry, and therefore the powder mixture can used for dry spray construction when long-range construction is required.

Further, the present invention makes it possible to form a geopolymer solidified body having a desired shape even in a lotic environment by externally adding water to a water-permeable bag body containing the powder mixture of the first embodiment, for example by putting the bag body into water, to allow water to enter into the bag body to form a geopolymer solidified body.

Generally, when a geopolymer structure is produced, a geopolymer in the form of slurry before solidification is poured into a container or a formwork having any shape and molded. In a lotic environment, however, the slurry flows and therefore cannot maintain a desired shape, which makes it very difficult to produce a geopolymer structure.

When the powder mixture of the first embodiment of the present invention is filled into a water-permeable bag body and put into water, a geopolymer solidified body can be formed by taking water entering into the bag body as a raw material while the shape thereof is maintained by the bag body. The water-permeable bag body to be used may be a bag body made of a fibrous polyester or polyethylene or a jute bag.

Further, when two or more bag bodies containing the powder mixture are stacked to each other in water, the geopolymer compositions in the respective bag bodies are solidified in a state where they are bonded together with the bag bodies being interposed therebetween so that the geopolymer-containing bags can adhere to each other to form an aggregation of the two or more geopolymer-containing bags adhering to each other.

Therefore, the geopolymer-containing bag can be used singly or as an aggregation for various purposes in a lotic environment, such as a sandbag for holding back water.

When the geopolymer powder mixture-containing bag body is used as a sandbag, a bag body previously filled with the powder mixture is brought into a site where it is to be used or the powder mixture is filled into a bag body at a site, and then the powder mixture in the bag body can be solidified using water at the site. In this case, the bag body placed in the site may externally be watered by water sprinkling or may be brought into contact with rain water, flowing water, or water in a puddle.

The bag body filled with the powder mixture not containing moisture is lighter in weight than a conventional sandbag filled with soil or sand, which makes it possible to significantly reduce efforts for transport work and installation work at a site. This is very advantageous for a measure against water exposure in a flood disaster or for shielding of earth and sand at a construction site. Further, the moisture-containing geopolymer slurry filled in a bag body is likely to have flat top and bottom surfaces due to its own weight, and therefore there is an advantage that the two or more bag bodies can easily be stacked to each other and spaces are hard to be created between the respective bag bodies.

Further, the bag body may be made of a non-woven fabric or a woven fabric. Irrespective of which of the fabrics is used, the gap between threads (water-permeability) can be set to a desired distance by changing the density of threads to be used. That is, when the density of threads to be used is reduced, buoyancy is provided by air in the bag body, and therefore it is possible to control whether or not the bag body floats on water. When the density is increased to increase the size of gaps (holes) in the bag body, the bag body allows water to pass through it, which makes it possible to reduce the influence of flowing water. By controlling the size of the gaps, it is possible to control the permeation of the viscous geopolymer while allowing water to pass through. Therefore, for example, it is also possible to allow the geopolymer to exude while allowing water to pass through by increasing the size of the gaps. In this case, since the geopolymer exudes from the bag body, as described above, the sandbag can adhere to other sandbags by taking advantage of high adhesive strength of the geopolymer, which makes it possible to enhance the water shielding performance of the sandbags. It should be noted that when solidified, the powder mixture in the bag body does not leak out from the bag body, and therefore the opening of the bag body does not necessarily need to be sealed.

Further, for example, when the bag body filled with the powder mixture is formed to be comparable in size to a ping-pong ball, a large number of the geopolymer-containing bag bodies can continuously be air-conveyed using a tube or the like for distributing high-pressure air. In this case, when a device that absorbs flying energy of the bag bodies is provided at the tip of a discharge nozzle, the bag bodies discharged from the nozzle can be prevented from scattering.

Further, the contents of the geopolymer-containing bag are all inorganic substances (geopolymer solidified body). Therefore, when the bag body is made of an inorganic material such as a glass cloth (glass fibers), the geopolymer-containing bag can be used even in a case where organic materials cannot be used, such as a case where the geopolymer-containing bag is used for decommissioning of a reactor in a nuclear power plant or as a material for solidifying radioactive waste.

Further, when made of an alkali-soluble material such as glass fibers, the bag body can be dissolved to disappear, which makes it possible to treat only the geopolymer solidified body as an inorganic material.

Further, in each of the above embodiments, the powder mixture containing an active filler and an alkali powder may be mixed with fiber to effectively prevent the occurrence of cracking. Particularly, when the powder mixture is sprayed together with water or a low-viscosity aqueous alkali solution, mixing with fiber makes it possible to improve adhesiveness to an object onto which the powder mixture is to be sprayed. The fiber to be mixed may be fiber made of a metal, an organic substance, or inorganic fibers (including glass fibers), and the length of the fiber may be either short or long.

### EXAMPLES

### [First Embodiment]

Hereinbelow, as a first embodiment of the present invention, geopolymer solidified bodies formed by mixing a powder mixture with water or a low-viscosity aqueous alkali solution will be shown as Examples 1 to 9 and Comparative Example 1. It should be noted that the present invention is not limited to these examples.

### [Used materials]

The geopolymer solidified bodies of Examples 1 to 9 and Comparative Example 1 used metakaolin and silica fume as a binder (active filler) and used fine aggregate and coarse aggregate as aggregate.

In Examples 1 to 9, sodium metasilicate and sodium hydroxide were used as an alkali powder, and pure water was used as water. As a low-viscosity aqueous alkali solution, an aqueous alkali solution was used which was obtained by diluting, with water, a common alkali solution (an aqueous alkali solution having a solid content of 55 to 50 wt%, for example, water glass No. 1 (JIS K1408) commercially available under the name of 1 K potassium silicate) to have a solid content of 40 wt% or less. In Example 9, an aqueous alkali solution having a solid content of 35 wt% was used.

In Comparative Example 1, sodium metasilicate and sodium hydroxide were used as an alkali solution, and pure water was used as water.

### [Molar ratio between atoms]

In Examples 1 to 9 and Comparative Examples 1, Si/Al in Examples 1 to 3, Examples 5 to 9, and Comparative Example 1 was set to 2.2, and that in Example 4 was set to 2.4

In Examples 1 to 9 and Comparative Examples 1, Na/Al in Examples 1, 3, 4, 6, 7, and 8 and Comparative Example 1 was set to 1, that in Example 2 was set to 0.6, that in Example 5 was set to 1.1, and that in Example 9 was set to 0.3. It should be noted that an active filler not containing potassium is used in Examples, and therefore Na/Al is used, but when an active filler containing potassium is used, (Na+K)/Al is used.

In Examples 1 to 9 and Comparative Examples 1, H₂O/Al₂O₃ in Examples 1 and 4 to 8 was set to 11, that in Example 2 was set to 7.8, that in Example 3 was set to 14, that in Example 9 was set to 6.5, and that in Comparative Example 1 was set to 10.

### [Production method 1]

In Examples 1 to 5, 7, and 9, geopolymer solidified bodies were produced under heat-curing conditions by a method (powder mixing method) including the following steps (1) to (6) and were subjected to a performance test.
(1) A binder (active filler), an alkali solid material, and aggregate are mixed without adding water using a pan-type mixer.
(2) The powder mixture and the aggregate in step (1) are mixed with water added thereto (in Example 9, the powder mixture and the aggregate are mixed with water and a low-viscosity aqueous alkali solution added thereto).
(3) The mixed geopolymer concrete is charged into a mold.
(4) Deaeration is performed.
(5) Sealed heat curing is performed in a thermostat at 60°C for 68 hours.
(6) After natural cooling, sealed room-temperature curing is performed until the test day.

### [Production method 2]

In Examples 6 and 8, geopolymer solidified bodies were produced under ordinary-temperature curing conditions by a method (powder mixing method) including the following steps (1) to (5) and were subjected to a performance test.
(1) A binder (active filler), an alkali solid material, and aggregate are mixed without adding water using a pan-type mixer.
(2) The powder mixture and the aggregate in step (1) are mixed with water added thereto.
(3) The mixed geopolymer concrete is charged into a mold.
(4) Deaeration is performed.
(5) Sealed room-temperature curing is performed until the test day.

### [Production method 3]

In Comparative Example 1, a geopolymer solidified body was produced under heat-curing conditions by a method (liquid mixing method) including the following steps (1) to (7) and was subjected to a performance test.
(1) Sodium metasilicate and sodium hydroxide were dissolved in pure water, and the resultant was cooled to 20°C or lower.
(2) The cooled alkali solution obtained in step (1) and a binder (active filler) are mixed using a stand mixer.
(3) The geopolymer slurry obtained in step (2) and aggregate previously mixed without adding water are mixed using a pan-type mixer.
(4) The mixed geopolymer concrete is charged into a mold.
(5) Deaeration is performed.
(6) Sealed heat curing is performed in a thermostat at 60°C for 68 hours.
(7) After natural cooling, sealed room-temperature curing is performed until the test day.

### [Test results]

The results of a compressive strength test performed on Examples 1 to 9 and Comparative Example 1 are shown in the following tables 2 and 3.

**[Table 2]**

| | Sl/Al | Entire powder Na / Al | H₂O/Al₂O₃ | Na in sodium hydroxide / Na in all alkali | Na in sodium metasilicate / (Na+K) in all alkali |
|---|---|---|---|---|---|
| Example 1 | 2.2 | 1 | 11 | 0.16 | 0.84 |
| Example 2 | 2.2 | 0.6 | 7.8 | 0.16 | 0.84 |
| Example 3 | 2.2 | 1 | 14 | 0.16 | 0.84 |
| Example 4 | 2.4 | 1 | 11 | 0.16 | 0.84 |
| Example 5 | 2.2 | 1.1 | 11 | 0.19 | 0.81 |
| Example 6 | 2.2 | 1 | 11 | 0.16 | 0.84 |
| Example 7 | 2.2 | 1 | 11 | 0.16 | 0.84 |
| Example 8 | 2.2 | 1 | 11 | 0.24 | 0.76 |
| Example 9 | 2.2 | 0.3 | 6.5 | 0 | 0.5 |
| Comparative Example 1 | 2.2 | 1 | 10 | 0.16 | 0.84 |

**[Table 3]**

| | (Na+K)/Al in entire solidified body with low-viscosity alkali solution used in combination (Na+K)/Al | Average particle diameter (µm) of sodium metasilicate | Average particle diameter(µm) of sodium hydroxide | Heating temperature (°C) | Heating time (h) | Compressive strength (MPa) (material age: 10 days or less) |
|---|---|---|---|---|---|---|
| Example 1 | 1 | 1000 | 1000 | 60 | 68 | 59.6 |
| Example 2 | 0.6 | 1000 | 1000 | 60 | 68 | 25.4 |
| Example 3 | 1 | 1000 | 1000 | 60 | 68 | 11.4 |
| Example 4 | 1 | 1000 | 1000 | 60 | 68 | 49.5 |
| Example 5 | 1.1 | 1000 | 1000 | 60 | 68 | 57.6 |
| Example 6 | 1 | 1000 | 1000 | Ordinary temperature (20°C) | 0 | 57.8 |
| Example 7 | 1 | 1000 | 5000 | 60 | 68 | 44.1 |
| Example 8 | 1 | 1000 | 1000 | Ordinary temperature (20°C) | 0 | 53.1 |
| Example 9 | 0.6 | 1000 | 1000 | 60 | 68 | 40.7 |
| Comparative Example 1 | 1 | 1000 | 5000 | 60 | 68 | 61.5 |

According to the test results, Examples 1 and 4 to 9 developed high strength almost comparable to that of Comparative Example 1 at a material age of 10 days or less under conditions of either of ordinary-temperature curing and heat curing. On the other hand, Example 3 in which H₂O/Al₂O₃ was 14 was inferior in strength to other examples due to its higher water content.

As a result, Examples 1 to 8 in which a powder mixture and aggregate were mixed with water added thereto and Example 9 in which a powder mixture and aggregate are mixed with a low-viscosity aqueous alkali solution added thereto all had sufficient compressive strength comparable to that of Comparative Example 1 in which a geopolymer slurry formed by mixing an alkali solution and a binder (active filler) was mixed with aggregate added thereto.

### [Second Embodiment]

Then, as a second embodiment of the present invention, Examples 10 and 11 and Comparative Example 2 are shown in which an ion exchange resin is solidified with a geopolymer. It should be noted that the present invention is not limited to these examples.

### [Production method]

In Examples 10 and 11, a geopolymer powder mixture and the same low-viscosity alkali solution as used in the first embodiment were added to an untreated ion exchange resin and water and mixed therewith, and the resultant was poured into a mold to form a geopolymer solidified body.

In Comparative Example 2, an untreated ion exchange resin was put into a geopolymer slurry prepared by previously mixing an active filler and an alkali solution, and the resultant was mixed and poured into a mold to form a geopolymer solidified body.

### [Molar ratio between atoms]

Si/Al in Examples 10 and 11 and Comparative Example 2 was set to 2.2, and (Na+K)/Al in the entire solidified body in Examples 10 and 11 was set to 0.8 and that in Comparative Example 2 was set to 1.

Na/Al in the powder mixture in Examples 10 and 11 was set to 0.4, and Na in powder mixture/(Na+K) in entire solidified body in Examples 10 and 11 was set to 0.5.

In Examples 10, 11 and Comparative Example 2, H₂O/Al₂O₃ in Examples 10 and 11 was set to 8.5 and that in Comparative Example 2 was set to 10.

### [Ion exchange resin content]

The ion exchange resin content in the geopolymer solidified body in Example 10 was set to 20 vol%, that in Example 11 was set to 70 vol%, and that in Comparative Example 2 was set to 16 vol%.

### [Test results]

An appearance evaluation test was performed by visual observation on Examples 10 and 11 and Comparative Example 2, and the results are shown in the following table 4.

**[Table 4]**

| | Comparative Example 2 | Example 10 | Example 11 |
|---|---|---|---|
| Production method | Untreated ion exchange resin was mixed with geopolymer slurry prepared by previously mixing active filler and alkali solution | Geopolymer powder and alkali solution were added to untreated ion exchange resin and water and mixed therewith | |
| Sl/Al | 2.2 | | |
| Entire solidified body (Na+K)/Al | 1 | 0.8 | |
| Na/Al in geopolymer powder | 0 | 0.4 | |
| (Na+K)/Al in entire solidified body with low-viscosity alkali solution used in combination | 1 | 0.8 | |
| Na in alkali powder / (Na+K) in entire solidified body | 0 | 0.5 | |
| H₂O / Al₂O₃ | 10 | 8.5 | |
| Untreated ion exchange resin content (vol%) | 16 | 20 | 70 |
| Conditions of formed solidified body | Poor | Excellent | Excellent |

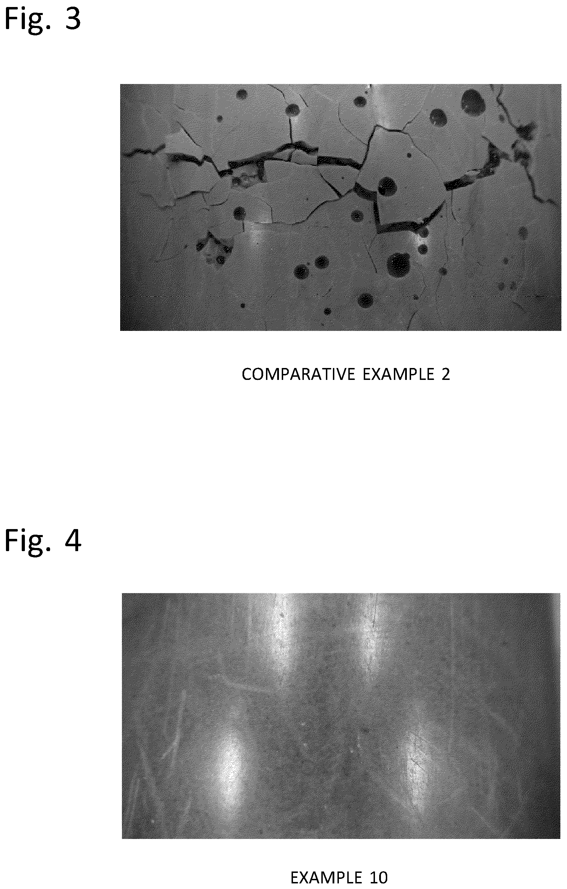

According to the test results, in Comparative Example 2 in which a geopolymer slurry was prepared by previously mixing an active filler and an alkali solution, as shown in Figure 3, cracks were produced in the test specimen due to poor adhesion between the geopolymer slurry and the ion exchange resin.

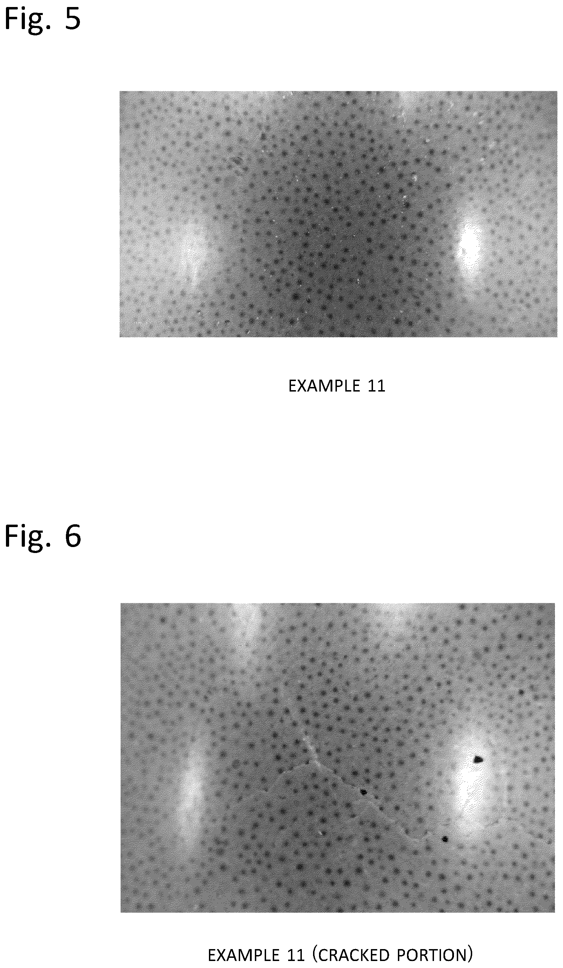

On the other hand, in Examples 10 and 11 in which a geopolymer powder mixture was mixed with an ion exchange resin together with a low-viscosity aqueous alkali solution, as shown in Figure 4 and Figure 5, the geopolymer and the ion exchange resin well adhered to each other so that stable geopolymer solidified bodies were formed. In this case, in Example 11 in which the ion exchange resin content was 70 vol%, a stable geopolymer solidified body was formed as a whole, but as shown in Figure 6, microcracks were produced in part of the geopolymer solidified body. This confirmed that a stable geopolymer solidified body is always formed by setting the ion exchange resin content to 70 vol% or less.

### [Third Embodiment]

Then, as a third embodiment of the present invention, Examples 12 and 13 are shown in which a powder mixture is sprayed together with water or a low-viscosity aqueous alkali solution. It should be noted that the present invention is not limited to these examples.

### [Used materials]

In Examples 12 and 13, metakaolin, fly ash, and silica fume were used as a binder (active filler) and sodium metasilicate and sodium hydroxide were used as an alkali powder for the geopolymer powder. In Example 12, water (pure water) was used as a liquid raw material, and in Example 13, a low-viscosity aqueous alkali solution formed from the same diluted aqueous sodium hydroxide solution No. 1 as used in the first embodiment was used as a liquid raw material.

### [Molar ratio between atoms]

In Example 12 and 13, Si/Al in Example 12 was set to 2.2 and that in Example 13 was set to 2.0. (Na+K) /Al in the powder raw material in Example 12 was set to 0.8 and that in Example 13 was set to 0.6.

### [Test method]

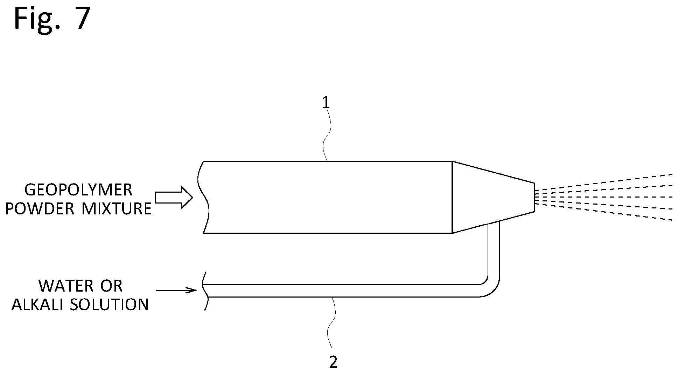

In actual dry spraying, as shown in Figure 7, a geopolymer powder mixture is pressure-fed to a spray nozzle 1, water or an alkali solution is supplied to the geopolymer powder mixture and mixed therewith in the spray nozzle 1 through a liquid pipe line 2 connected to the spray nozzle 1, and the resultant is sprayed through the spray nozzle 1. However, this test was performed by the following method as a simulation test in which the same conditions as the dry spraying were reproduced.

First, water or a low-viscosity alkali solution was thinly spread to coat the top surface of an iron plate, and the geopolymer powder mixture was evenly sprinkled onto the iron plate. This was repeated twice, and then pressure was applied by putting a weight on the top surface (to reproduce pressure applied during spraying). The resultant was stored at ordinary temperature to determine whether or not the geopolymer powder mixture was applicable to dry spraying depending on whether a plate-shaped geopolymer solidified body was formed on the surface of the iron plate or not.

### [Test results]

The test results of Examples 12 and 13 are shown in the following table 5.

**[Table 5]**

| | | Example 12 | Example 13 |
|---|---|---|---|
| Geopolymer powder | Alkali powder | Sodium metasilicate | Sodium metasilicate |
| | | | Sodium hydroxide |
| | Active filler | Metakaolin | Metakaolin |
| | | Fly ash | Fly ash |
| | | Silica fume | Silica fume |
| Liquid raw material | | Water (Pure water) | Diluted aqueous sodium hydroxide solution No. 1 |
| (Na+K)/Al of powder raw material | | 0.8 | 0.6 |
| Si/Al of powder raw material | | 2.2 | 2.0 |
| Occurrence or non-occurrence of geopolymerization | | Geopolymerized | Geopolymerized |

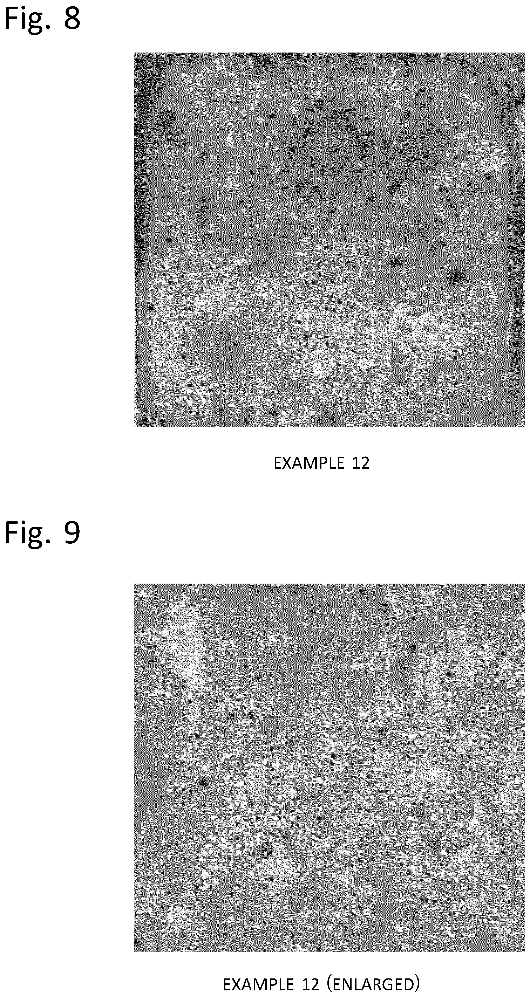

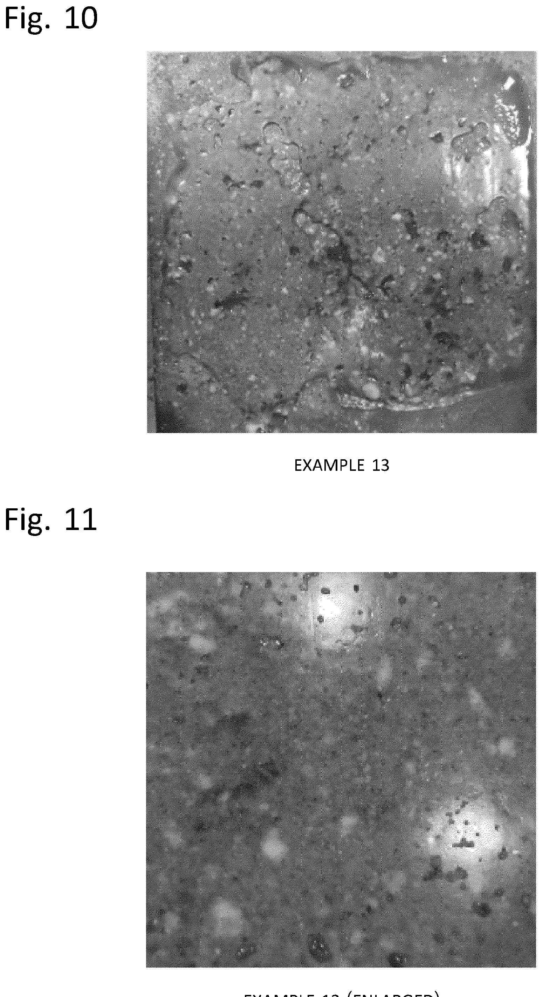

As shown in Figure 8 to Figure 11, the test results confirmed that in each of Examples 12 and 13, a plate-shaped geopolymer solidified body was formed on the surface of the iron plate, that is, geopolymerization occurred. This confirmed that dry spraying could practically be performed by spraying the powder mixture of the present invention together with water or a low-viscosity aqueous alkali solution.

### [Fourth Embodiment]

Hereinbelow, as a fourth embodiment of the present invention, Example 14 is shown in which a bag body containing a powder mixture is put into water. It should be noted that the present invention is not limited to this example.

### [Used materials]

In Example 14, the geopolymer powder used metakaolin, fly ash, and silica fume as a binder (active filler) and used sodium metasilicate and sodium hydroxide as an alkali powder. As the bag body in which the geopolymer powder was contained, a water-permeable bag made of a fibrous polyester was used.

### [Molar ratio between atoms]

In Example 14, Si/Al of the powder raw material was set to 2.2, and (Na+K)/Al of the powder raw material was set to 1.

### [Test method]

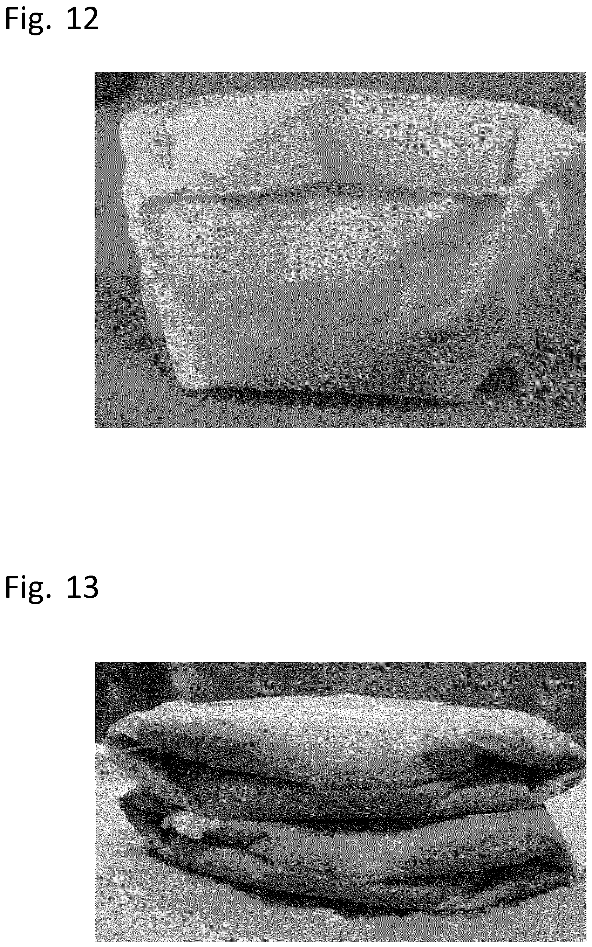

As shown in Figure 12, the geopolymer powder was filled into a bag body, and as shown in Figure 13, two bag bodies containing the geopolymer powder were stacked to each other and left to stand in water. After a lapse of 96 hours, whether or not the geopolymer was solidified and whether or not the bag bodies adhered to each other were determined.

### [Test results]

The test results of Example 14 are shown in the following table 6.

**[Table 6]**

| | | Example 14 |
|---|---|---|
| | | Bag bodies containing geopolymer powder were put into water |
| Geopolymer powder | Alkali powder | Sodium metasilicate, Sodium hydroxide |
| | Active filler | Metakaolin, Fly ash, Silica fume |
| Material of bag body | | Polyester |
| (Na+K)/Al of powder raw material | | 1 |
| Si/Al of powder raw material | | 2.2 |
| Standing time in water | | 96 hours |
| Occurrence or non-occurrence of solidification | | Solidified |
| Adhesion between bag bodies | | Adhered |

The test results confirmed that the geopolymer in the bag bodies was solidified and that the bag bodies adhered to each other. Further, as shown in Figure 14, the cross-sections of the geopolymer solidified bodies in the bag bodies confirmed that the geopolymer solidified body was solidified through to the inside thereof.

## Claims

1. A powder mixture that is obtained by mixing an active filler and an alkali powder and that is to be mixed with water or with water and aggregate added thereto to form a geopolymer solidified body, wherein
the alkali powder is composed of any one of a powder of sodium metasilicate, a powder of sodium metasilicate and sodium hydroxide, and a powder of sodium metasilicate and potassium hydroxide, and
a molar ratio of a total of sodium and potassium to aluminum ((Na+K)/Al) in the entire powder mixture is more than 0.5.

2. The powder mixture according to claim 1, wherein the sodium metasilicate has an average particle diameter of 1000 µm or less.

3. The powder mixture according to claim 1, wherein each of the sodium hydroxide and the potassium hydroxide has an average particle diameter of 5000 µm or less.

4. The powder mixture according to claim 1, wherein a molar ratio of silicon to aluminum (Si/Al) is 1.8 or more.

5. The powder mixture according to claim 1, wherein a molar ratio between a total of sodium and potassium in a hydroxide and a total of sodium in a silicic acid-containing alkali is 0.53 or less.

6. The powder mixture according to claim 1, wherein metakaolin is contained in a mass ratio of 10% or more relative to the entire active filler.

7. The powder mixture according to claim 1, wherein fiber is mixed with the active filler and the alkali powder.

8. A method for producing a geopolymer solidified body, the method comprising:
mixing the powder mixture according to any one of claims 1 to 7 with water or with water and aggregate added thereto to form a geopolymer solidified body.

9. A method for producing a geopolymer solidified body, the method comprising:
adding a potassium-containing low-viscosity aqueous alkali solution and aggregate to a powder mixture obtained by mixing an active filler and an alkali powder to form a geopolymer solidified body, wherein
the alkali powder is composed of any one of a powder of sodium metasilicate, a powder of sodium metasilicate and sodium hydroxide, and a powder of sodium metasilicate and potassium hydroxide, and
a molar ratio of sodium contained in sodium metasilicate in the alkali powder to a total of sodium and potassium in the entire geopolymer solidified body (Na/(Na+K)) is 0.4 or more.

10. The method for producing a geopolymer solidified body according to claim 9, wherein a molar ratio of a total of sodium and potassium to aluminum ((Na+K)/Al) in the aqueous alkali solution and the entire powder mixture is 0.5 or more.

11. The method for producing a geopolymer solidified body according to claim 9, wherein a molar ratio of water to alumina (H₂O/Al₂O₃) in the entire geopolymer solidified body is 13 or less.

12. The method for producing a geopolymer solidified body according to claim 9, wherein the powder mixture is mixed with fiber.

13. A method for producing a geopolymer solidified body, the method comprising:
adding a low-viscosity aqueous alkali solution and 70 vol% or less of an object to be solidified in a non-solidified state to the powder mixture according to any one of claims 1 to 7 to form a geopolymer solidified body.

14. A method for producing a geopolymer solidified body, the method comprising:
spraying the powder mixture according to any one of claims 1 to 7 together with water or a low-viscosity aqueous alkali solution to form a geopolymer solidified body.

15. A method for producing a geopolymer solidified body, the method comprising:
filling the powder mixture according to any one of claims 1 to 7 into a water-permeable bag body and externally adding water to the bag body to form a geopolymer solidified body.

16. The method for producing a geopolymer solidified body according to claim 15, wherein
two or more bag bodies containing the powder mixture are stacked to each other and water is externally added to the bag bodies.

17. The method for producing a geopolymer solidified body according to claim 15 or 16, wherein the bag body is composed of an alkali-soluble material.
